# EUROPEAN PATENT APPLICATION

(11) **EP 4 822 578 A1**
(43) Date of publication of application: **14.10.2026**
(21) Application number: 25170097.7
(22) Date of filing: 11.04.2025
(51) Int. Cl.: G06F 30/15, G06F 30/20, F03D 17/00, G06F 113/06

(54) **DESIGNING A WIND TURBINE COMPONENT IN ACCORDANCE WITH A DESIGN LOAD DETERMINED BASED ON WIND TURBULENCE LEVEL**

(71) Applicant: VESTAS WIND SYSTEMS A/S, 8200 Aarhus N (DK)
(72) Inventor: Faber, Mark, 8240 Risskov (DK); Thesbjerg, Leo, 6950 Ringkøbing (DK)
(74) Representative: Vestas Patents Department

(57) **Abstract**

A method (20) of designing a wind turbine component, comprising, for each of a plurality of defined quantiles of a turbulence distribution describing wind turbulence level at a given wind speed (201), determining (202) the turbulence level at the respective defined quantile, simulating (203) wind turbine operation with the determined turbulence level, determining (204) a fatigue loading level experienced by the wind turbine at the determined turbulence level, and applying (205) a defined probability to the determined fatigue loading level to obtain a weighted fatigue loading level. These weighted fatigue loading levels are combined to obtain (206) an overall fatigue loading level for the given wind speed. The process is repeated for different wind speeds, and a design load for fatigue loading of the wind turbine is determined (208) based on the overall fatigue loading levels for different wind speeds. A wind turbine component is designed (209) in accordance with the determined design load.

## Description

### TECHNICAL FIELD

The invention relates to designing a wind turbine component, such as a wind turbine tower, in accordance with a design load for fatigue loading of the wind turbine. In particular, the invention relates to determining said design load for fatigue loading based on combining weighted fatigue loading levels for wind turbine operation at respective turbulence levels corresponding to turbulence levels at a defined plurality of respective quantiles of a turbulence distribution.

### BACKGROUND

Various components of wind turbines, such as rotor blades, the tower, etc., need to withstand different types of loads over their lifetime. For instance, this can include expected ultimate/extreme loads that will be experienced over a component's lifetime, and fatigue loads caused by the cyclical or periodic nature of wind turbine operation.

To design a wind turbine component, it is desirable to optimise material usage without compromising on structural safety. That is, it is desired to minimise an amount of material in the component, e.g. an amount of steel in the wind turbine tower, while still ensuring the component can withstand the various loads it is expected to experience during its lifetime. Expressed differently, it is desired to design a wind turbine component that is not overly conservative (i.e. too much material) while also not being unconservative (i.e. insufficient material).

A number of design load cases may be considered during design of a wind turbine component. In particular, the life of a wind turbine can be represented by a set of design situations covering conditions that the wind turbine may experience. The design load cases are used to verify the structural integrity of the wind turbine. Design load analysis can include analysis of ultimate/extreme loads and fatigue loads.

A turbulence level of incoming wind at a given wind speed needs to be taken into account when determining fatigue loading experienced by a wind turbine component during the design process. In particular, it needs to be taken into account that the turbulence level is not a constant value, but instead is described by a distribution. However, to consider the fatigue loading for each and every possible outcome of the turbulence level according to a distribution would be burdensome and time consuming.

In a known approach - as outlined in the IEC (International Electrotechnical Commission) 61400-1 standard - a turbulence level used during fatigue load analysis is the turbulence level of the 90% quantile of a turbulence distribution, for a given wind speed, experienced during the lifetime of a wind turbine, possibly with the addition of wake effects experienced by the wind turbine. While this provides a simplified and less time consuming way to incorporate the turbulence level into the fatigue load analysis, it is overly conservative and so leads to design of components in which material usage is not optimised.

It is against this background to which the present invention is set.

### SUMMARY OF THE INVENTION

According to an aspect of the invention there is provided a method of designing a wind turbine component. The method comprises obtaining a turbulence distribution, for each of one or more respective wind speeds, describing turbulence level of wind in the vicinity of the wind turbine during wind turbine operation. The method includes steps that are repeated for each of the one or more turbulence distributions for the respective wind speed. The repeated steps include, for each of a plurality of defined quantiles of the respective turbulence distribution: determining, from the respective turbulence distribution, the turbulence level at the respective defined quantile; simulating operation of the wind turbine with the determined turbulence level; determining, based on output from the simulation, a fatigue loading level experienced by the wind turbine at the determined turbulence level; and applying a defined probability to the determined fatigue loading level to obtain a weighted fatigue loading level. The repeated steps include combining the plurality of weighted fatigue loading levels to obtain an overall fatigue loading level for the respective wind speed. The method comprises determining a design load for fatigue loading of the wind turbine based on the one or more overall fatigue loading levels for the one or more respective wind speeds. The method comprises designing the wind turbine component in accordance with the determined design load.

Optionally, the plurality of defined probabilities together cover lifetime operation of the wind turbine.

The plurality of probabilities may be defined such that a fatigue loading level obtained for lifetime wind turbine operation with the turbulence levels of the respective defined quantiles occurring with the respective probability substantially corresponds to a true fatigue loading level obtained for lifetime wind turbine loads according to the turbulence distribution for the respective wind speed.

The plurality of defined quantiles may include five quantiles or fewer.

The plurality of defined quantiles may be three quantiles.

At least one of the defined quantiles may have a value less than a 50% quantile of the turbulence distribution for the respective wind speed.

At least one of the defined quantiles may be within a defined range of values from a peak of the turbulence distribution for the respective wind speed.

At least one of the quantiles may have a value greater than a 90% quantile of the turbulence distribution for the respective wind speed. Optionally, at least one of the quantiles has a value greater than a 95^{th} quantile of the turbulence distribution.

The obtained turbulence distribution for each respective wind speed may be of a defined distribution type. Optionally, the defined distribution type is one of: a lognormal distribution; and a Weibull distribution.

Obtaining the turbulence distribution for each respective wind speed may comprise receiving turbulence data indicative of turbulence levels experienced by the wind turbine during operation over time at the respective wind speed. Optionally, the received turbulence data comprises field measurement data. Obtaining the turbulence distribution for each respective wind speed may comprise fitting a distribution curve to the received turbulence data to obtain the turbulence distribution.

The received turbulence data may comprise ambient turbulence data. The method may comprise determining a plurality of higher-order moments, greater than a second order moment, of the ambient turbulence data. The distribution curve may be fitted based on the determined plurality of higher-order moments.

Determining the higher-order moments may comprise determining a fourth order moment and an eighth order moment of the ambient turbulence data. The distribution curve may be fitted based on the fourth and eighth order moments.

Prior to fitting the distribution curve, added wake turbulence indicative of wake effects experienced by the wind turbine during operation may be added to the higher-order moments.

Optionally, operation of the wind turbine is simulated for a defined load case.

According to another aspect of the invention there is provided a non-transitory, computer readable storage medium storing instructions thereon that, when executed by one or more computer processors, cause the one or more computer processors to perform the method defined above.

According to another aspect of the invention there is provided a wind turbine component designed in accordance with the method defined above.

### BRIEF DESCRIPTION OF THE DRAWINGS

Examples of the invention will now be described, with reference to the accompanying drawings, in which:
Figure 1 is a schematic illustration of a wind turbine;
Figure 2 shows the steps of a method of designing a component of the wind turbine of Figure 1 in accordance with an aspect of the invention;
Figure 3 schematically illustrates a lognormal distribution fitted to higher order moments of turbulence data indicative of wind turbulence levels in the vicinity of the wind turbine of Figure 1; and
Figure 4 schematically illustrates a probability distribution function of the fitted lognormal distribution of Figure 3.

### DETAILED DESCRIPTION

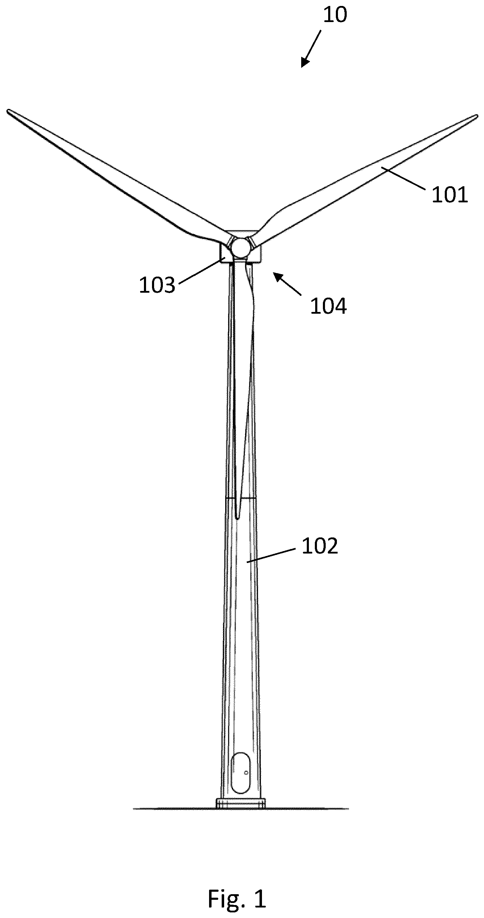

Figure 1 schematically illustrates a wind turbine 10. The invention relates to design of a component of the wind turbine 10, such as rotor blades 101, a tower 102, a nacelle 103 or a rotor 104 of the wind turbine 10. The design of a wind turbine component, such as the tower 102, influences the efficiency of energy capture during wind turbine operation. However, the design of the wind turbine components also influences loading experienced by these and other components of the wind turbine 10 during operation or while at standstill. Wind turbine components may therefore be designed to maximise power production / energy capture of the wind turbine while ensuring component loading remains within allowable limits. In particular, wind turbine components are designed in accordance with relevant standards governing component design.

For a particular design of a wind turbine component, such as the tower 102, it needs to be verified that limit states of the wind turbine component are not exceeded. The limit state is the state of a component and the loads acting upon it, beyond which structural failure occurs. Indeed, the purpose of design calculations - i.e. the design requirement for the limit state - is to keep the probability of a limit state being reached below a certain value prescribed for the wind turbine component.

Different types of loads experienced by the wind turbine during operation may be considered as part of the limit state verification process. For instance, gravitational and inertial loads result from gravity, vibration and rotation. Aerodynamic loads are static and dynamic loads that are caused by the airflow and its interaction with the stationary and moving parts of the wind turbine.

As mentioned above, the life of a wind turbine can be represented by a set of design situations covering conditions that the wind turbine may experience. These design load cases are used to verify the structural integrity of the wind turbine over the operating lifetime of the wind turbine.

Design load analysis can include analysis of extreme/ultimate and fatigue loads. The different types of loads mentioned above may be taken into account for the analysis of each design load case. For instance, the design load cases for fatigue loading may include the so-called normal operation cases - Design Load Cases (DLC) 1.2 - in the IEC 61400-1 standard.

For fatigue loading analysis, an entire time series modelling loads over time, e.g. lifetime of the wind turbine, for a given design load case needs to be considered. The approach for fatigue loading therefore needs to be formulated as a probability problem.

Indeed, for fatigue loading analysis it needs to be decided how to take into account that, for a given wind speed, the turbulence level of wind in the vicinity of the wind turbine is not a constant, but will instead be described by a distribution. As mentioned above, to consider each and every outcome of the turbulence level according to a given distribution would be burdensome and time consuming.

An approach for how to take into account the turbulence level without considering each and every outcome of a distribution is given in the IEC 61400-1 standard. In particular, in this approach the turbulence level at the 90% quantile of a turbulence distribution for a given wind speed is used as the ambient turbulence in the fatigue load analysis. Wake effects, and other wind effects specific to the site in which the wind turbine is located, may also be included, e.g. added to the ambient turbulence.

In the approach of the IEC standard, the 90% quantile is not determined from a probability distribution but determined directly from ambient turbulence levels over time, e.g. received as time series data, as: ${σ}_{{0}_{90}} = {μ}_{σ 0} + 1.28 {σ}_{σ 0}$ where *σ*_{0₉₀} is the 90% quantile turbulence level, and *µ*_{*σ*0} and *σ*_{*σ*0} are the mean and standard deviation of the ambient turbulence, respectively. There are no assumptions made about the underlying turbulence distribution. The formula for wake turbulence *σ*₉₀ becomes ${σ}_{90} = \sqrt{{{σ}_{add}}^{2} + {{σ}_{{0}_{90}}}^{2}}$ where *σ*_{add} is a further turbulence effect - in addition to ambient turbulence - caused by wake.

Designing components using this approach is overly conservative and leads to component design in which material usage is not optimised, e.g. more material than is needed is used.

The present invention is advantageous in that it provides for the design of a wind turbine component, e.g. tower, that optimises material usage, e.g. minimises an amount of steel used in the tower, while being able to withstand fatigue loads experienced during wind turbine operation. That is, it provides for the design of wind turbine components that are less conservative than design according to previous approaches, e.g. the 90% quantile approach outlined above, while still meeting the defined strength requirements. These benefits are achieved via the provision of an approach that more accurately takes into account turbulence levels experienced by a wind turbine during operation to be used for fatigue load analysis. The approach of the present invention benefits from including this accurate reflection of turbulence levels in a convenient and time/cost efficient manner in which it is not needed to simulate across all of the different possible turbulence levels in a probability distribution describing turbulence levels over lifetime operation of the wind turbine.

These advantageous effects are achieved via the provision of a novel approach for taking into account turbulence in incoming wind for fatigue loading analysis of a wind turbine component. In this approach, weighted fatigue loading levels, using defined weightings/probabilities, obtained for turbulence levels at a plurality of respective defined quantiles of a turbulence distribution for a given wind speed are combined to provide an overall fatigue loading level from which a design load is determined. This approach is described in detail below.

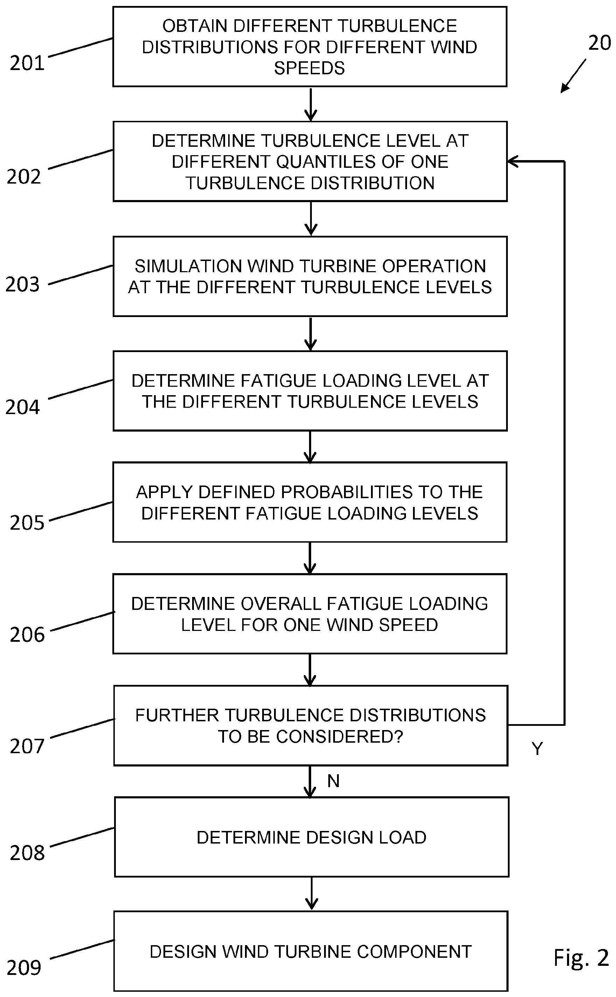

Figure 2 shows the steps of a method 20 for designing a wind turbine component in accordance with examples of the invention. The component may be any suitable component of the wind turbine 10, such as all or part of the tower 102, drivetrain, rotor hub, rotor blades 101, etc.

The steps of the method 20 may be computer-implemented steps. Any suitable computing device may be used to execute the steps of the method 20. For instance, the computing device may be in form of one or more functional units or modules implemented on one or more computer processors. Such functional units may be provided by suitable software running on any suitable computing substrate using conventional or custom processors and memory. The one or more functional units may use a common computing substrate (for example, they may run on the same server) or separate substrates, or one or both may themselves be distributed between multiple computing devices. A computer memory may store instructions for performing the described method 20, and the processor(s) may execute the stored instructions to perform the method 20.

At step 201, the method 20 involves obtaining a turbulence probability distribution, for each of one or more respective wind speeds, describing the turbulence level of wind in the vicinity of the wind turbine during wind turbine operation. The different wind speeds - or different wind speed ranges - may correspond to the different wind speeds experienced during wind turbine operation. Each of the one or more turbulence distributions may be predefined/predetermined in some examples. In some other examples, the method 20 includes determining the or each turbulence distribution based on obtained data.

In the latter case, temporal data indicative of ambient turbulence levels of wind in the vicinity of the wind turbine 10 may be received. For instance, this may be in the form of field measurement data, e.g. from one or more suitable sensors of a wind turbine or wind farm, or from a meteorological mast (with the measurement data optionally being obtained before the wind turbine/farm is erected). Alternatively, the ambient turbulence level data may be simulation data. The turbulence data may be in the form of a time series signal and may correspond to ambient turbulence levels experienced/observed during operation across the lifetime of the wind turbine.

The ambient turbulence data is binned into different wind speed bins. A different turbulence probability distribution will be calculated for each different wind speed (different wind speed bin). This may be performed in different ways. In some examples, a defined type of distribution curve is fitted to the turbulence data. The defined distribution type may be a lognormal distribution or a Weibull distribution, for instance. Indeed, the relevant IEC standard allows for the use of these types of distribution instead of the 90% quantile value. In some examples, an empirical distribution function (accumulated histogram) is used based on the turbulence data.

The distribution curve may be fitted to the turbulence data based on certain (mathematical) moments of the turbulence data. For instance, the first and second moments - corresponding to the mean and standard deviation - could be used to perform the fitting. However, in examples of the invention, higher order moments - e.g. higher than second order - of the turbulence data may be used to fit the distribution curve. Use of higher order moments may provide a more accurate representation of a tail of the distribution curve compared to using first and second order moments. This can be particularly useful in the context of fatigue load analysis, where the relative weight/importance of this part of the distribution curve is high. In one specific example, the fourth and eighth order moments of the turbulence data are used to fit the distribution curve, with the other higher order moments - up to the tenth order moment - being used to check the fitting. However, it will be understood that different higher order moments can be used in different examples.

The following describes an approach for fitting a lognormal distribution to obtained turbulence data. In this approach, it is assumed that the obtained turbulence data can be represented by a lognormal distribution as follows: ${f}_{S 0 _ LN} \left({μ}_{n 0}, {σ}_{n 0}, σ\right) ; = \frac{1}{\sqrt{2 π} {σ}_{n 0}} exp \left[-\frac{{\left(ln\left(σ\right)-{μ}_{n 0}\right)}^{2}}{2 {{σ}_{n 0}}^{2}}\right] \frac{1}{σ}$ where *µ*_{*n*0} and *σ*_{*n*0} are the parameters defining the distribution and they represent the mean and the standard distribution of the underlying normal distribution. The index 0 indicates that it is the ambient turbulence under consideration. The *m*'th order moment for a lognormal distribution is given by ${κ}_{LN 0} \left(m\right) = exp \left({mμ}_{n 0}+\frac{1}{2}{m}^{2}{{σ}_{n 0}}^{2}\right)$

The lognormal distribution for the ambient turbulence is obtained by determining the two parameters *µ*_{*n*0} and *σ*_{*n*0} in a way that the moments of order *m*₁ and *m*₂, found from the above equation, become equal to the corresponding moments obtained from wind measurements.

As mentioned above, in one example the moments *m*₁ = 4 and *m*₂ = 8 are used. The wind measurements may be ten-minute measurements, for instance. Given the two moments *κ*_{*LN*0}(*m*₁) and *κ*_{*LN*0(}*m*₂) for the ambient turbulence, then two equations can be set up according to the expression for *κ_{LN0}*(*m*) above. These are then solved for *µ*_{*n*0} and *σ*_{*n*0}*.* The solutions may be written in terms of the effective turbulences, σ_{eff01}^{*m*₁} *= κ_{LN0}*(*m*₁) and *σ*_{eff02}^{*m*₂} = *κ_{LN0}*(*m*₂), and may be expressed as: ${σ}_{n 0} = \sqrt{\frac{2 ln \left(\frac{{σ}_{eff 02}}{{σ}_{eff 01}}\right)}{{m}_{2} - {m}_{1}}}$ ${μ}_{n 0} = ln \left({σ}_{eff 01}\right) - \frac{1}{2} {m}_{1} {\left({σ}_{n 0}\right)}^{2}$

When the two parameters for the lognormal distribution are known, the moment of an arbitrary order for the ambient turbulence may be calculated from the expression for *κ*_{*LN*0}(*m*) above.

In some examples, the effects of wake flow - in addition to ambient turbulence - are to be taken into account when fitting the distribution curve. The wake effects experienced by the wind turbine 10 may be site specific, and may include wake effects caused by other wind turbines in the vicinity of the wind turbine 10, i.e. other turbines in the same wind farm, and/or wake effects caused by complex terrain in the vicinity of the wind turbine 10.

The wake effects may be taken into account using the known Sten Frandsen approach, in which an extra turbulence caused by wake, denoted *σ*_{add}, is added to the ambient turbulence *σ*₀. The total turbulence is then given by $σ = \sqrt{{{σ}_{add}}^{2} + {{σ}_{0}}^{2}}$

For a given wind speed, the added turbulence may be a constant value depending on the wind speed, the distance to neighbouring wind turbines, and the thrust coefficient. Given the probability of the probability distribution for the ambient turbulence *f*_{*s*0} then the probability distribution for the wake turbulence may be given by ${f}_{s} \left(σ\right) = {f}_{s 0} \left(\sqrt{{{σ}_{add}}^{2} + {{σ}_{0}}^{2}}\right) \frac{σ}{\sqrt{{{σ}_{add}}^{2} + {{σ}_{0}}^{2}}}$

Returning to the lognormal method, in situations in which wake is included, the moments for the resulting turbulence may be found as ${κ}_{LN} \left(m\right) = {\sum }_{i = 0}^{\frac{m}{2}} \left(combin\left(\frac{m}{2}, i\right){{σ}_{add}}^{m - 2 i}{κ}_{LN 0}\left(2i\right)\right)$

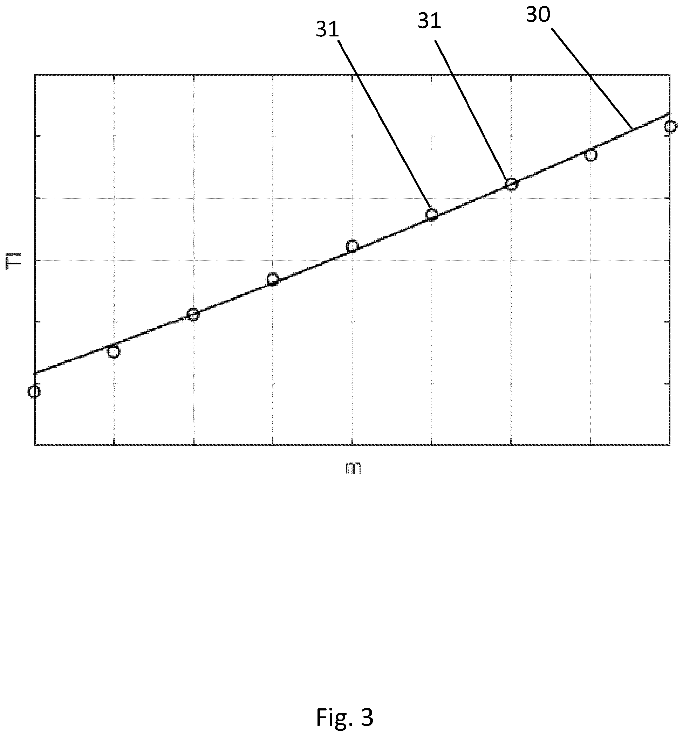

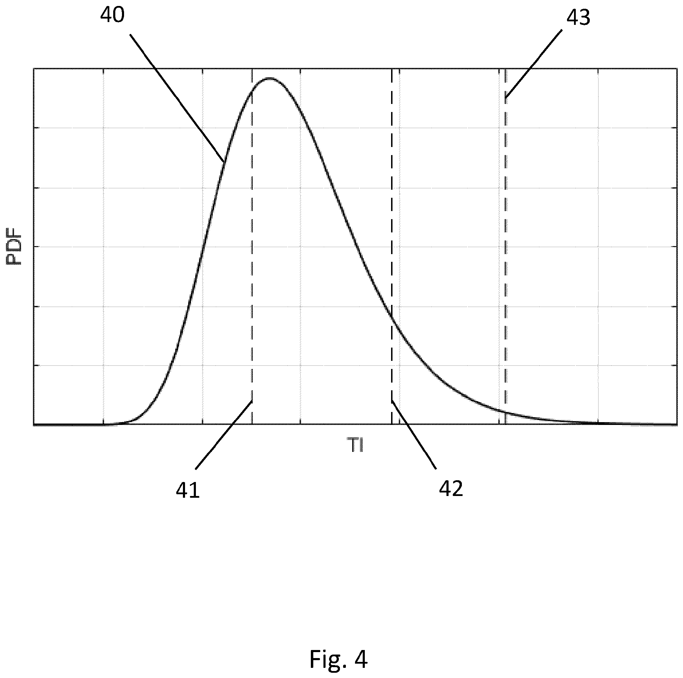

Figure 3 schematically illustrates a lognormal distribution 30 fitted to higher order moments of the turbulence data, indicated as the open circles 31. Figure 4 then schematically illustrates a probability distribution function 40 of this fitted lognormal distribution of Figure 3.

Referring back to Figure 2, once the turbulence distributions have been obtained for each respective wind speed, then at step 202, for each turbulence distribution, the turbulence levels at a plurality of different quantiles of the respective turbulence distribution are obtained. Percentiles could be referred to instead of quantiles.

By considering a plurality of quantiles - and so a plurality of turbulence levels - this allows for different Wohler exponents to be accounted for. In fatigue analysis, an S-N curve or Wohler curve indicates the sum of the load changes that can be endured until a material is fractured, where S is stress and N is number of cycles. The Wohler exponent describes the relationship between the number of cycles to failure and the applied stress amplitude (or load) for a material under cyclic loading.

While the number of quantiles to be sampled is greater than one, the number may typically be less than or equal to five quantiles. The greater the number of quantiles considered the greater the accuracy of the fatigue loads determined in subsequent steps. However, the greater the number of quantiles the more burdensome and time consuming the determination of these fatigue loads is.

In a specific example of the invention, three quantiles are considered. The specific values of the quantiles may be selected, as appropriate. Referring again to Figure 4, three quantiles 41, 42, 43 to be used in the described example are indicated. In the illustrated example, one of the quantiles 41 is in a region in which the bulk of the distribution 40 is. Specifically, in the illustrated example this quantile is just less than a quantile at a peak of the distribution. More generally, this quantile may be within a defined range of the peak of the distribution, e.g. within five quantiles either side of the peak. This quantile may be less than the 50% quantile of the distribution. Another one of the quantiles 42 may be a relatively high value. For instance, this quantile may be in a similar range to the 90% quantile from the known method outlined above. A further one of the quantiles 43 may be a still higher value, and may be for capturing the tail (for high Wohler exponents) of the probability density function 40. This quantile 43 may be above the 95% quantile of the function 40, for instance.

In an example in which three quantiles and lognormal fitting are to be used, the three turbulences to be used for subsequent load calculations are determined from an approximated lognormal distribution including wake. Note that if there is no wake, then the distribution is the same as the lognormal distribution described above. When wake is included, the effective turbulences *σ*_{eff1} and *σ*_{eff2} corresponding to the moments *κ_{LN}*(*m*₁) and *κ_{LN}(m*₂) obtained as described above are used to determine the parameters for the lognormal distribution, as follows: ${σ}_{n} = \sqrt{\frac{2 ln \left(\frac{{σ}_{eff 2}}{{σ}_{eff 1}}\right)}{{m}_{2} - {m}_{1}}}$ ${μ}_{n} = ln \left({σ}_{eff 1}\right) - \frac{1}{2} {m}_{1} {\left({σ}_{n}\right)}^{2}$

The cumulative lognormal distribution based on the determined parameters is given by *F_{S_LN}*(*σ*)*,* where the inverse function is *F*_{*S_LN_*inv}(*q*)*.* The three quantiles to be used can be expressed as $q : = \left(\begin{matrix}{q}_{1} \\ {q}_{2} \\ {q}_{3}\end{matrix}\right)$

So, the three turbulence levels to be used for subsequent load calculations are determined by ${σ}_{{q}_{i}} = {F}_{S _ LN _ inv} \left({q}_{i}\right)$ for i = 1 ... 3.

Referring again to Figure 2, at step 203 the method 20 involves, for a turbulence distribution for a given wind speed, simulating operation of the wind turbine 10 with the determined turbulence level at each of the respective quantiles 41, 42, 43. Each simulation may correspond to operation of the wind turbine at one or more defined load cases, such as the normal loading cases for fatigue loading specified in the relevant standard (e.g. DLC 1.2), as mentioned above. The simulations may be performed using any suitable wind turbine simulation software.

At step 204, the method 20 involves, for each simulation at the respective turbulence level for a given wind speed, determining a fatigue loading level experienced by the wind turbine 10 using the simulation output. In the described example, the fatigue loading level for a given simulation may be determined based on rainflow counting being applied to the time series output of the simulation.

At step 205, the method 20 involves applying defined probability/weighting values to the respective determined fatigue loading levels for the turbulence distribution of the given wind speed under consideration. The obtained values are referred to as weighted fatigue loading levels. The plurality (i.e. three, in the described example) of defined probability values typically add up to (substantially or exactly) one, i.e. 100%. This ensures that the overall lifetime of the wind turbine 10 is unchanged relative to an approach in which a single, e.g. 90%, quantile is considered. That is, the probability of occurrence of each simulation of a defined load case - e.g. DLC 1.2 - is distributed between the plurality - e.g. three - turbulence levels according to the defined probabilities.

The defined probabilities may be determined/defined in any suitable manner. In particular, the plurality of probabilities may be defined such that a fatigue loading level obtained for lifetime wind turbine operation with the turbulence levels of the respective defined quantiles occurring with the respective probability substantially corresponds to a true fatigue loading level obtained for lifetime wind turbine loads according to the turbulence distribution for the respective wind speed. That is, the probabilities may be defined such that the obtained fatigue loading level for operation at the turbulence levels of the defined quantiles corresponds to the actual fatigue loading level that would be observed if each and every quantile of the turbulence distribution is considered. In an example, the defined probability values are derived from a requirement that the effective turbulence found from the plurality of quantiles should be the same as that found from the applied lognormal distribution for a plurality of (e.g. two) predefined Wohler exponents. In another example, the defined probability values are determined by minimising a difference between the effective turbulences for a suitable range of Wohler exponents.

In an example in which the three quantiles 41, 42, 43 illustrated in Figure 4 are used, a defined (first) probability value of the first quantile 41 may have a highest value and account for the majority of wind turbine operation. A defined (second) probability value of the second quantile 42 may then have a lower value than the first probability value, and a defined (third) probability value of the third quantile 43 may be the lowest of the three probability values.

At step 206, the method 20 involves combining the plurality of weighted fatigue loading levels to obtain an overall fatigue loading level for the specific wind speed under consideration. This combining step is typically a simple addition of the weighted fatigue levels.

An overall/lifetime fatigue loading level for each different turbulence distribution for each respective wind speed needs to be determined. At step 207, therefore, it is determined whether or not all of the turbulence distributions - for the different respective wind speeds - have been considered. If not, then the method 20 loops back to step 202, and steps 202-206 are repeated for another turbulence distribution - for a different wind speed - that has not yet been considered. This loop is repeated until all of the different turbulence distributions - for all of the different wind speeds - have been analysed according to the described method steps.

Once all of the (one or more) turbulence distributions have been analysed to obtain the corresponding one or more overall fatigue loading levels, then at step 208 the method 20 involves determining a design load for fatigue loading of the wind turbine 10 based on the one or more overall fatigue loading levels for the one or more respective wind speeds. In one example, the design load may be determined based on a combination of the overall fatigue loading levels. For instance, the overall fatigue loading levels - raised to an exponent and then weighted based on how long the wind turbine operates in the corresponding state - may be summed together.

At step 209, the method 20 involves designing the wind turbine component - e.g. tower 102 - in accordance with the design load determined in step 208. In some examples, the method 20 may then further involve manufacturing the wind turbine component designed in accordance with the determined design load. Alternatively, in some examples the method 20 may comprise modifying an existing wind turbine component in accordance with the determined design load, e.g. changing an amount of steel in a wind turbine tower.

Many modifications may be made to the described examples without departing from the scope of the appended claims.

In the described examples, a lognormal distribution is fitted to obtained turbulence data. It will be understood that different types of distribution curves may be used in different examples. For instance, the above-described method steps can be applied in a corresponding manner when a Weibull distribution is fitted to obtained turbulence data. In such a case, the defined probabilities applied to the fatigue loads for the turbulence levels at different quantiles will have different values compared to the probability values when a lognormal curve is used, in order to recover the actual/true load level of the underlying probability distribution.

In the described examples, different turbulence distributions are obtained for different wind speeds. In some examples, different turbulence distributions may additionally, or alternatively, we obtained for different (absolute) wind directions. Fatigue loading levels may then be determined for different wind directions in a corresponding manner to above, with the results being combined based on defined probabilities of each wind direction, again in a corresponding manner to above. The wind direction under consideration may be an ambient wind direction. Wake effects may then be added to each different wind direction separately as these wake effects are typically highly directionally dependent on where neighbouring wind turbines are located in a wind farm in which the wind turbine under consideration is located.

In the described examples, the different turbulence distributions obtained for different wind speeds may be regarded as being in relation to a specific component or sensor of the wind turbine. In some examples, the described method will be repeated for a plurality of, e.g. each, different component and/or sensor of the wind turbine to determine respective overall fatigue loading levels. The design load may then be determined based on the different fatigue loading levels for the different components/sensors.

## Claims

1. A method of designing a wind turbine component, the method comprising:
obtaining a turbulence distribution, for each of one or more respective wind speeds, describing turbulence level of wind in the vicinity of the wind turbine during wind turbine operation;
for each of the one or more turbulence distributions for the respective wind speed:
for each of a plurality of defined quantiles of the respective turbulence distribution:
determining, from the respective turbulence distribution, the turbulence level at the respective defined quantile;
simulating operation of the wind turbine with the determined turbulence level;
determining, based on output from the simulation, a fatigue loading level experienced by the wind turbine at the determined turbulence level;
applying a defined probability to the determined fatigue loading level to obtain a weighted fatigue loading level;
combining the plurality of weighted fatigue loading levels to obtain an overall fatigue loading level for the respective wind speed;
determining a design load for fatigue loading of the wind turbine based on the one or more overall fatigue loading levels for the one or more respective wind speeds; and
designing the wind turbine component in accordance with the determined design load.

2. A method according to Claim 1, wherein the plurality of defined probabilities together cover lifetime operation of the wind turbine.

3. A method according to Claim 1 or Claim 2, wherein the plurality of probabilities are defined such that a fatigue loading level obtained for lifetime wind turbine operation with the turbulence levels of the respective defined quantiles occurring with the respective probability substantially corresponds to a true fatigue loading level obtained for lifetime wind turbine loads according to the turbulence distribution for the respective wind speed.

4. A method according to any previous claim, wherein the plurality of defined quantiles includes five quantiles or fewer.

5. A method according to Claim 4, wherein the plurality of defined quantiles is three quantiles.

6. A method according to any previous claim, wherein at least one of the defined quantiles is within a defined range of values from a peak of the turbulence distribution for the respective wind speed; optionally, wherein said at least one of the defined quantiles has a value less than a 50% quantile of the turbulence distribution for the respective wind speed.

7. A method according to any previous claim, wherein at least one of the quantiles has a value greater than a 90% quantile of the turbulence distribution for the respective wind speed.

8. A method according to any previous claim, wherein the obtained turbulence distribution for each respective wind speed is of a defined distribution type; optionally, wherein the defined distribution type is one of: a lognormal distribution; and a Weibull distribution.

9. A method according to any previous claim, wherein obtaining the turbulence distribution for each respective wind speed comprises:
receiving turbulence data indicative of turbulence levels experienced by the wind turbine during operation over time at the respective wind speed; optionally, wherein the received turbulence data comprises field measurement data; and
fitting a distribution curve to the received turbulence data to obtain the turbulence distribution.

10. A method according to Claim 9, wherein the received turbulence data comprises ambient turbulence data, the method comprising determining a plurality of higher-order moments, greater than a second order moment, of the ambient turbulence data, and wherein the distribution curve is fitted based on the determined plurality of higher-order moments.

11. A method according to Claim 10, wherein determining the higher-order moments comprises determining a fourth order moment and an eighth order moment of the ambient turbulence data, and wherein the distribution curve is fitted based on the fourth and eighth order moments.

12. A method according to Claim 10 or Claim 11, wherein, prior to fitting the distribution curve, added wake turbulence indicative of wake effects experienced by the wind turbine during operation is added to the higher-order moments.

13. A method according to any previous claim, wherein operation of the wind turbine is simulated for a defined load case.

14. A non-transitory, computer readable storage medium storing instructions thereon that, when executed by one or more computer processors, cause the one or more computer processors to perform the method of any previous claim.

15. A wind turbine component designed in accordance with the method of any of Claims 1 to 13.
